# FASCICULE DE BREVET EUROPEEN

(11) **EP 3 551 484 B1**
(45) Date de publication et mention de la délivrance du brevet: **04.01.2023**
(21) Numéro de dépôt: 17804574.6
(22) Date de dépôt: 29.11.2017
(51) Int. Cl.: B60G 7/02, B62D 21/11, B62D 25/08, B62D 29/00

(54) **DISPOSITIF DE LIAISON ENTRE UN LONGERON EN ALUMINIUM DE VÉHICULE ET UN BRAS DE SUSPENSION**
VERBINDUNGSVORRICHTUNG ZWISCHEN EINER ALUMINIUMSEITENLEISTE EINES FAHRZEUGS UND EINES QUERLENKERS
LINKING DEVICE BETWEEN AN ALUMINIUM SIDE RAIL OF A VEHICLE AND A CONTROL ARM

(30) Priorité: 06.12.2016 FR 1661998
(43) Date de publication de la demande: 16.10.2019
(73) Titulaire: Renault s.a.s, 92100 Boulogne Billancourt (FR)
(72) Inventeur: CHEVALIER, Maxime, 78960 Voisins le bretonneux (FR); ESTIOT, Christophe, 28100 Dreux (FR)
(74) Mandataire: Renault Group
(86) Numéro de dépôt international: PCT/EP2017/080756
(87) Numéro de publication internationale: WO 2018/104120

(56) Documents cités:
- EP-A1- 1 322 513
- DE-A1- 19 612 885
- FR-A1- 2 749 261
- FR-A1- 2 890 633
- FR-A1- 2 890 640
- US-A- 4 973 075
- US-A- 5 897 139
- US-A1- 2002 063 408
- US-B1- 6 193 273
- US-B1- 9 233 589

## Description

La présente invention concerne un dispositif de liaison entre un longeron latéral en aluminium de structure de caisse de véhicule, notamment de véhicule automobile, et une extrémité de bras de suspension qui comporte une bague cylindrique d'articulation. Un exemple d'un tel dispositif est divulgué dans le document FR2749261 A1.

Par soucis d'allégement, la caisse en blanc du véhicule est conçue en aluminium. Le soubassement de la caisse comporte alors majoritairement une composition de profilés d'aluminium assemblés par collage, rivetage et/ou soudage, notamment pour les parties soumises à des contraintes mécaniques et/ou thermiques élevées.

Il s'agit de trouver une solution de renforcement du soubassement et en particulier des longerons arrière, pour un véhicule dans lequel le groupe motopropulseur est disposé à l'arrière. Les fonctions de liaison au sol doivent également pouvoir s'assembler dans cette zone.

Généralement, les véhicules sont conçus par assemblage de pièces d'acier embouties. En effet, l'acier est facilement emboutissable et permet d'obtenir des pièces résistantes. Les longerons et le berceau arrière constituent alors de manière connue en soi une structure de pièces embouties. De même, les pièces assurant les fonctions de liaison au sol sont assemblées sur des pièces en acier plié ou embouti, rapportées sur la structure.

Dans le cadre d'un allègement de structure, l'utilisation de profilés extrudés limite les possibilités d'interfaçage des éléments de liaison au sol. La fonderie d'aluminium devient alors un procédé intéressant.

Le document FR2890641A1 divulgue des parties latérales de faux-châssis réalisées par moulage d'aluminium sous pression et soudées à une partie centrale de faux-châssis réalisée sous forme d'un profilé extrudé en aluminium. Le moulage sous pression est mieux adapté à la réalisation de pièces de faible épaisseur que de pièces massives. La faible épaisseur a pour inconvénient d'affaiblir la rigidité, inconvénient auquel le document antérieur propose de remédier en prévoyant des nervures de renforcement. Le montage d'un groupe motopropulseur sur le faux châssis divulgué, pose de nombreux problèmes comme par exemple le soutien et le passage de l'arbre moteur vers les roues ou encore celui des transmissions de vibrations par les articulations d'un bras de suspension.

Pour remédier aux problèmes de l'état antérieur de la technique, l'invention a pour objet un dispositif de liaison entre un longeron latéral en aluminium de structure de caisse de véhicule, un assemblage de berceau et une extrémité de bras de suspension qui comporte une bague cylindrique d'articulation. Le dispositif est remarquable en ce qu'il comporte une pièce de fonderie d'aluminium comprenant une face supérieure fixée sous le longeron, et une paroi latérale de laquelle émerge perpendiculairement à une face latérale externe au moins une première interface de bras de suspension comprenant une paire d'ailettes distantes entre elles d'une valeur d'entrefer supérieure à la longueur de la bague cylindrique de façon à enchâsser l'extrémité de bras de suspension.

Particulièrement, la première interface de bras de suspension comprend une paire d'ailettes qui fait partie intégrante de la pièce de fonderie d'aluminium avec soumission à une opération d'usinage après sortie de fonderie.

Plus particulièrement, la paire d'ailettes comprend une première ailette à base massive pour maintenir rigidement sa position et une deuxième ailette à base amincie pour permettre à son extrémité opposée de s'orienter vers la première ailette de manière à pincer ladite bague cylindrique entre les deux ailettes.

Plus particulièrement aussi, le dispositif comprend au moins une cale insérée entre une extrémité de la bague cylindrique et une face intérieure de la paire d'ailettes.

Encore plus particulièrement, deux cales sont reliées par une barrette.

Particulièrement aussi, la pièce de fonderie d'aluminium comprend une interface de biellette de pince qui comporte une paire d'ailettes pour enchâsser une extrémité de biellette de pince et qui fait partie intégrante de la pièce de fonderie d'aluminium avec soumission à une opération d'usinage après sortie de fonderie.

Particulièrement aussi, la première ou une deuxième interface de bras de suspension comprend une chape en acier qui comporte une paire d'ailettes et qui est vissée sur la pièce de fonderie d'aluminium.

Avantageusement, le dispositif comprend une vis traversant les ailettes et la bague cylindrique d'articulation pour réduire par serrage la valeur d'entrefer de la paire d'ailettes d'une même interface de bras de suspension.

Particulièrement, chaque ailette comporte une fenêtre oblongue de longueur sensiblement parallèle à la face supérieure de la pièce de fonderie d'aluminium de sorte qu'il est possible d'approcher et d'éloigner la bague cylindrique d'articulation et par conséquent l'extrémité de bras de suspension de la pièce de fonderie d'aluminium en faisant glisser le corps de la vis dans la fenêtre oblongue.

Plus particulièrement la vis comporte un disque excentrique pour se plaquer contre une face d'ailette qui comprend au moins une glissière contre laquelle vient s'appliquer la tranche du disque excentrique de sorte qu'il est possible de faire glisser le corps de la vis dans la fenêtre oblongue en tournant la vis.

D'autres caractéristiques et avantages de l'invention seront mieux compris à la lecture de la description d'un mode de réalisation nullement limitatif, et illustré par les dessins annexés, sur lesquels :
- la figure 1 est une vue schématique en perspective éclatée d'un assemblage de berceau sur caisse auquel l'invention est applicable ;

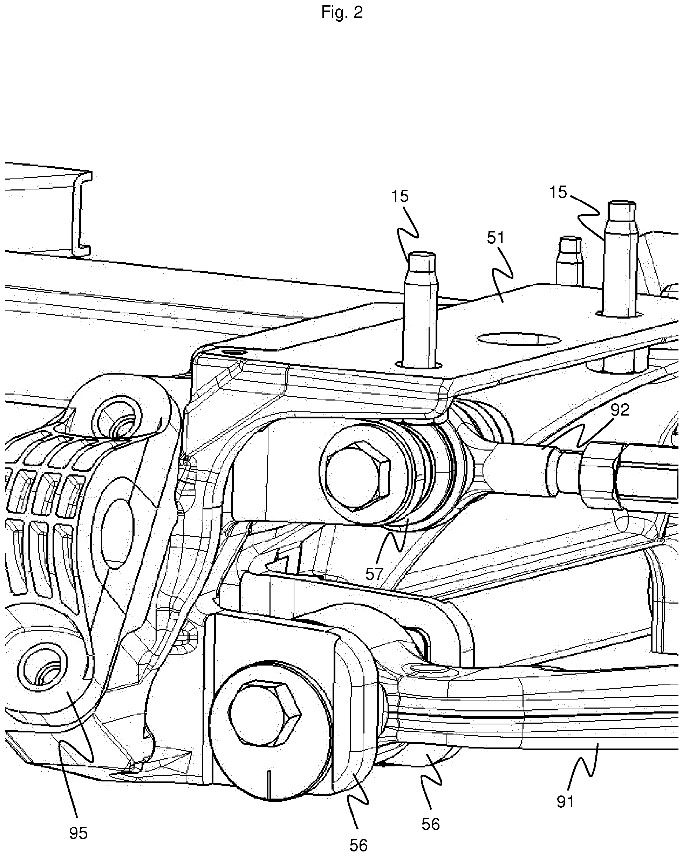

- la figure 2 est une vue schématique en perspective d'un détail de pièce de fonderie illustrant les principales fonctions de liaison au sol combinées à celles d'assemblage de la figure 1 ;
- la figure 3 est une vue schématique en perspective d'une face extérieure de la pièce de fonderie prévue pour un montage d'éléments de liaison au sol ;
- la figure 4 est une vue schématique en perspective éclatée des éléments de liaison au sol associées à la pièce de fonderie fixée sur le berceau :
- la figure 5 est une vue schématique en perspective d'une face intérieure de la pièce de fonderie prévue pour sa fixation sur le berceau ;
- la figure 6 est une vue schématique en perspective éclatée d'un mode de réalisation du dispositif conforme à l'invention ;
- la figure 7 est une vue schématique en perspective qui montre un montage de triangle de suspension au moyen du dispositif de la figure 6 ;
- la figure 8 est une vue partielle en coupe du dispositif conforme à l'invention.

L'assemblage conforme à l'invention permet d'obtenir des pièces résistantes, légères et compactes sur lesquelles les éléments de liaison au sol peuvent venir se monter aisément.

La conception de l'invention repose sur le choix de réaliser une pièce en fonderie d'aluminium qui permet le lien entre les longerons de la structure de caisse du véhicule et le berceau tout en offrant les fixations nécessaires aux éléments de liaison au sol. Ainsi, barre anti devers, triangle de suspension inférieur et biellette de pince peuvent venir s'arrimer solidement, et avec les interfaces adéquates sur la pièce de fonderie. Le procédé de fonderie par gravité associé à une opération d'usinage offre une latitude appréciable dans les formes autorisées et leur précision. En outre, l'utilisation de la pièce de fonderie permet d'intégrer l'ensemble des fonctions dans un minimum d'espace, respectant ainsi les contraintes d'architecture du véhicule.

Dans l'exemple de mise en oeuvre présenté ci-après à titre illustratif sur un véhicule à propulsion arrière, on comprendra comment la pièce de fonderie apporte aussi de la rigidité à la structure du véhicule et en particulier au niveau des longerons arrière largement entamés pour permettre le passage de l'arbre de transmission.

On décrit maintenant comment la pièce de fonderie assure trois fonctions essentielles qui comportent outre celles d'assembler le berceau arrière sur les longerons et de rigidifier la structure, celles d'offrir les interfaces des éléments de liaison au sol.

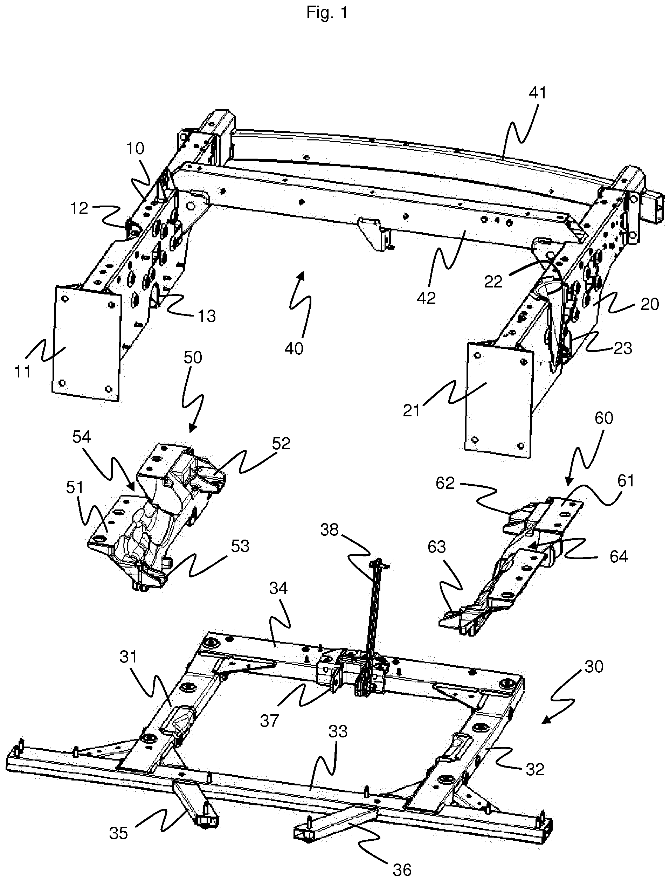

Sur la figure 1, on a représenté un assemblage de berceau 30 en aluminium pour véhicule sur une structure de caisse comprenant un longeron latéral droit 10 et un longeron latéral gauche 20, l'un et l'autre en aluminium. La partie de structure de caisse 40 particulièrement décrite ici pour un véhicule à propulsion arrière, constitue une partie arrière de structure de caisse. L'homme du métier pourra aisément transposer tout au long de la lecture de la suite de la description, l'enseignement de l'invention à un véhicule à traction avant s'il en éprouve le besoin.

Dans le mode de réalisation exposé, chacun des longerons arrière 10, 20 comprend une face avant 11, 21 respective pour être fixée à une partie centrale de caisse constituant l'habitacle du véhicule, elle-même de préférence en aluminium, extrudé, embouti ou plié et assemblé par collage-rivetage. Les longerons 10, 20, quant à eux, sont de préférence en aluminium extrudé à chaud.

La face latérale extérieure de chaque longeron 10, 20, en d'autres termes chaque face de longeron orientée vers un côté extérieur du véhicule, comporte une dépression concave 12, 22, conique à pointe orientée vers le bas, dépression ouverte à la fois côté le plus profond (base du cône) sur la face supérieure, et côté axe du cône sur la face latérale extérieure du longeron, pour permettre un passage d'amortisseur (non représenté).

Les longerons 10, 20, dimensionnés pour supporter un groupe motopropulseur, sont reliés en partie supérieure par une traverse centrale 42 et en extrémité arrière par une traverse extrême arrière 41, toutes deux en aluminium extrudé, soudé et/ou vissé. Le longeron latéral droit 10, le longeron latéral gauche 20 et la traverse centrale 42 sont par exemple des profilés rectilignes d'aluminium extrudés à chaud. La traverse extrême arrière 41 est par exemple un profilé d'aluminium extrudé puis cintré à chaud.

De préférence le longeron latéral droit 10 et le longeron latéral gauche 20 sont soudés à chaque extrémité de la traverse centrale 42 et la traverse extrême arrière 41 est fixée par vis en extrémités arrières des longerons 10, 20.

Une pièce 50 de fonderie d'aluminium comprend une face supérieure 51 qui est fixée sous le longeron latéral droit 10. De préférence, la face supérieure 51 comporte une partie arrière 51a venant se fixer à une position arrière par rapport à la pointe du demi cône de la dépression concave 12, et une partie avant 51b venant se fixer à une position avant par rapport à la pointe du demi cône de la dépression concave 12. De la sorte, la pièce 50 de fonderie d'aluminium permet de renforcer le longeron 10 sous l'emplacement de la pointe de demi-cône formé par la dépression concave 12. Symétriquement, une pièce 60 de fonderie d'aluminium comprend une face supérieure 61 qui est fixée sous le longeron latéral gauche 20 de manière symétrique comparable à la pièce 50 de fonderie d'aluminium pour renforcer le longeron 20 sous l'emplacement de la pointe de demi-cône formé par la dépression concave 22.

Le berceau 30 est plus particulièrement ici un berceau arrière qui comprend une poutre latérale droite 31 et une poutre latérale gauche 32, reliées par une poutre transversale arrière 34 et par une poutre transversale avant 33. Les poutres 31 à 34 peuvent être réalisées en aluminium embouti et plié. Une réalisation des poutres 31 à 34 sous forme de profilés d'aluminium, par exemple obtenus par extrusion à chaud, procure une meilleure tenue mécanique et thermique. La poutre transversale avant 33 est débordante de chaque côté du berceau pour mieux se fixer sur l'unité centrale du véhicule. La poutre transversale arrière 34 supporte un étrier 37 sensiblement centrale dont elle est solidaire, par exemple par liaison vissée, et sur lequel est fixé un tirant 38 de renforcement pour une biellette de reprise de couple moteur (non représentée).

Une poutre 35 oblique orientée à partir de la poutre 31 vers l'intérieur de l'habitacle en traversant la poutre 33 et une poutre 36 oblique orientée à partir de la poutre 32 vers l'intérieur de l'habitacle en traversant la poutre 33, permettent de diffuser les efforts par reprise sur le tunnel (non représenté) de passage de câbles et de conduites de l'avant de l'habitacle vers le compartiment moteur situé à l'arrière du véhicule.

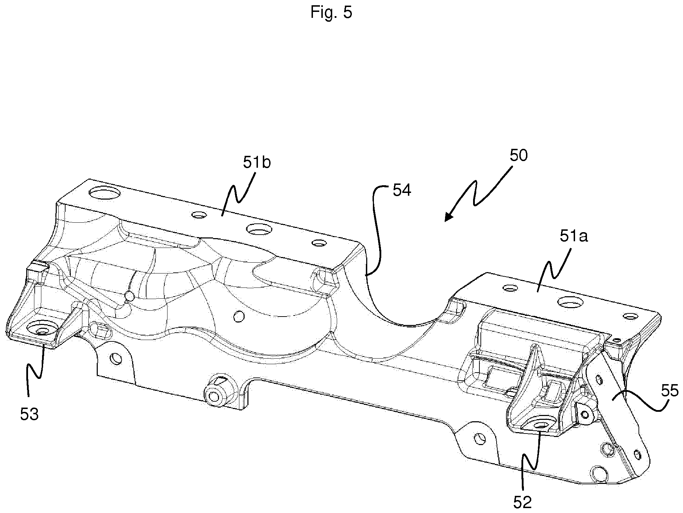

Au moins une partie inférieure de la pièce 50 de fonderie et de la pièce 60 de fonderie, est fixée sur le berceau 30. On entend par partie inférieure toute partie possible de la pièce de fonderie située en dessous de la face supérieure 51. Dans le mode de réalisation illustré par la figure 5, la pièce 50 de fonderie d'aluminium comprend en partie inférieure une excroissance 52 située à l'arrière d'une face latérale intérieure et une excroissance 53 située à l'avant de la face latérale intérieure. On entend par face latérale intérieure, toute face de la pièce de fonderie orientée, en d'autres termes regardant vers l'intérieur du compartiment moteur. Les excroissances 52, 53 peuvent être sur des parties inférieures de niveaux différents. Chaque excroissance 52, 53 comprend une surface qui est sensiblement parallèle à la face supérieure 51 de la pièce 50 de fonderie d'aluminium et qui est percée sensiblement en son centre pour permettre le passage d'une vis de fixation sur la face supérieure de la poutre latérale 31. On entend par surfaces sensiblement parallèles entre elles, des surfaces dont les perpendiculaires à leurs plans divergent entre elles par exemple d'un angle inférieur à 10°. De même, la pièce 60 de fonderie d'aluminium comprend en partie inférieure une excroissance 62 située à l'arrière d'une face latérale intérieure et une excroissance 63 située à l'avant de la face latérale intérieure comme on peut le voir aussi sur la figure 1.

La pièce 50 de fonderie comprend une ouverture 54 traversante de la face latérale intérieure à la face latérale extérieure pour permettre un passage d'arbre moteur du groupe motopropulseur vers la roue droite (non représenté). De la sorte, la pièce 50 de fonderie évite une fragilisation du longeron 10 par un passage de l'arbre moteur le traversant. On peut réaliser l'ouverture 54 sous forme tubulaire mais cette réalisation nécessite une pièce de fonderie suffisamment haute pour contenir le diamètre de la forme tubulaire nécessaire au passage de l'arbre moteur.

Pour réduire l'encombrement de la pièce 50 de fonderie, l'ouverture 54 est sous forme de dépression concave semi-cylindrique pratiquée dans la face supérieure 51 de la pièce 50 de fonderie. La face inférieure du longeron 10 comprend alors une dépression concave semi-cylindrique 13 agencée pour former un cylindre creux de diamètre suffisant au passage de l'arbre moteur lorsque la dépression concave semi-cylindrique 13 est disposée au-dessus et en regard de l'ouverture 54 sous forme de dépression concave semi-cylindrique. La partie arrière 51a de la face supérieure 51 vient alors se fixer en position arrière par rapport à la dépression concave semi-cylindrique constituant l'ouverture 54, et la partie avant 51b vient alors se fixer en position avant par rapport à la dépression concave semi-cylindrique constituant l'ouverture 54. De la sorte, la pièce 50 de fonderie renforce à encombrement minimal, l'endroit du longeron 10 dans lequel on peut pratiquer une ouverture suffisante par dépression concave, en combinaison avec celle de la pièce de fonderie pour le passage de l'arbre moteur, ainsi que dans son voisinage proche on peut pratiquer l'ouverture 12, elle aussi par dépression concave, suffisante pour le passage de l'amortisseur (non représenté) au plus près du longeron 10.

De même, la pièce 60 de fonderie comprend une ouverture 64 traversante de la face latérale intérieure à la face latérale extérieure pour permettre un passage d'arbre moteur du groupe motopropulseur vers la roue gauche (non représentés).

Il est possible d'obtenir chaque pièce de fonderie d'aluminium par moulage sous pression, en prenant les mesures nécessaires bien connues pour éviter les phénomènes de retrait au refroidissement et de microbulles, comme par exemple par utilisation de masselotte. Pour atteindre plus facilement les caractéristiques mécaniques requises, chaque pièce 50, 60 de fonderie est obtenue par coulée gravitaire d'aluminium. Avantageusement par rapport au moule à sable, la coulée gravitaire en coquille permet l'utilisation et la réutilisation d'un moule permanent.

Le procédé de coulée gravitaire en coquille permet d'obtenir des caractéristiques mécaniques particulièrement remarquables de chaque pièce 50, 60 de fonderie par utilisation d'un alliage d'aluminium approprié, notamment d'un alliage d'aluminium comprenant de 6,5 à 7,5% de silicium et de 0,25 à 0,45% de manganèse qui offre une résistance à la traction comprise entre 285 et 295 MPa.

La face supérieure 51, respectivement 61 de la pièce 50, respectivement 60, de fonderie d'aluminium, est fixée sous le longeron 10, respectivement 20 par des vis 15. De manière comparable, la ou les parties inférieures 52, 53, respectivement 62, 63 de la pièce 50, respectivement 60, de fonderie d'aluminium, sont fixées sur la face supérieure de la poutre 31, respectivement 32 du berceau 30 par des vis. On utilise de préférence des vis en acier pour les caractéristiques mécaniques de ce métal particulièrement appropriées à la fixation, préalablement soumises à un traitement zinc-nickel pour ses caractéristiques de mise en compatibilité de l'acier en contact avec l'aluminium.

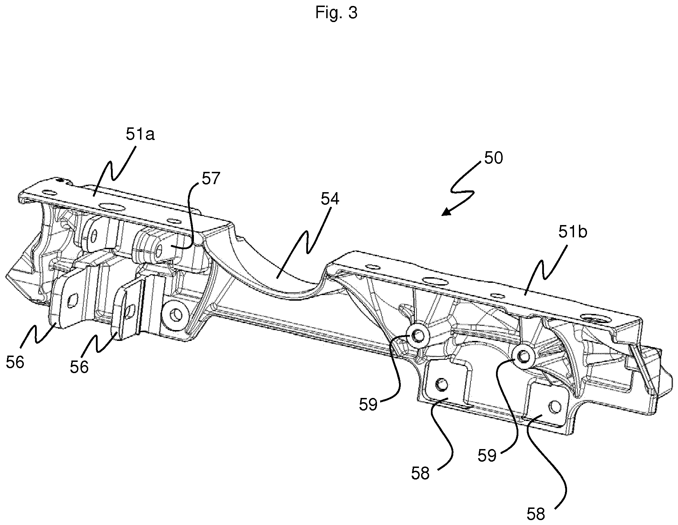

Comme illustré par la figure 3, la pièce 50 de fonderie d'aluminium, et de même symétriquement la pièce 60 de fonderie d'aluminium, comprend une première paire d'ailettes 56 sur une paroi latérale pour enchâsser une extrémité de bras ou de première branche 91 de triangle de suspension. Notamment, la paire d'ailettes 56 émerge perpendiculairement à la face latérale externe de la pièce 50 de fonderie d'aluminium, sous la partie arrière 51a de la face supérieure 51. Chaque ailette est transpercée sensiblement en son centre par une ouverture permettant un passage d'axe ou de vis 97 de maintien de bras ou de première branche 91 de triangle de suspension.

La pièce 50, et de même symétriquement la pièce 60, de fonderie d'aluminium comprend une deuxième paire d'ailettes 57 sur ladite paroi latérale pour enchâsser une extrémité de biellette de pince 92.

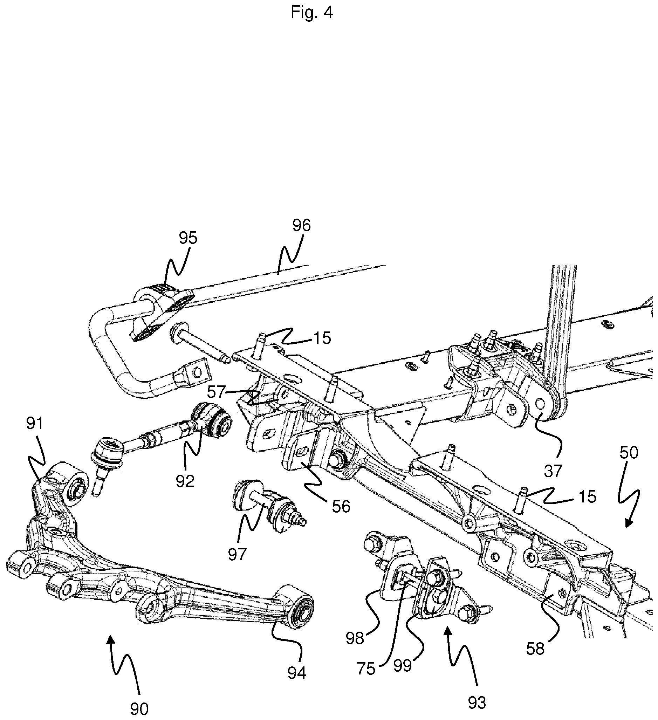

La pièce 50, et de même symétriquement la pièce 60, de fonderie d'aluminium comprend aussi sur la paroi latérale une interface 58, 59 de fixation de chape 93. Comme illustré par la figure 4, la chape 93 comprend deux parois verticales pour enchâsser une extrémité de deuxième branche 94 de triangle de suspension. Une fabrication en acier de la chape 93 permet de plier une partie supérieure orientée vers l'extérieur et une partie inférieure orientée vers l'intérieure de chaque paroi verticale, sans perte de qualité mécanique, pour venir s'appliquer respectivement contre deux excroissances 59 et contre deux méplats verticaux 58 de l'interface pour y être fixées par des vis.

De plus, la pièce 50, et de même symétriquement la pièce 60, de fonderie d'aluminium comprend un méplat 55, respectivement 65, oblique sur lequel est fixé un palier 95 de barre stabilisatrice 96. Une réalisation du palier 95 en matériau polymère contribue à l'allégement de l'assemblage.

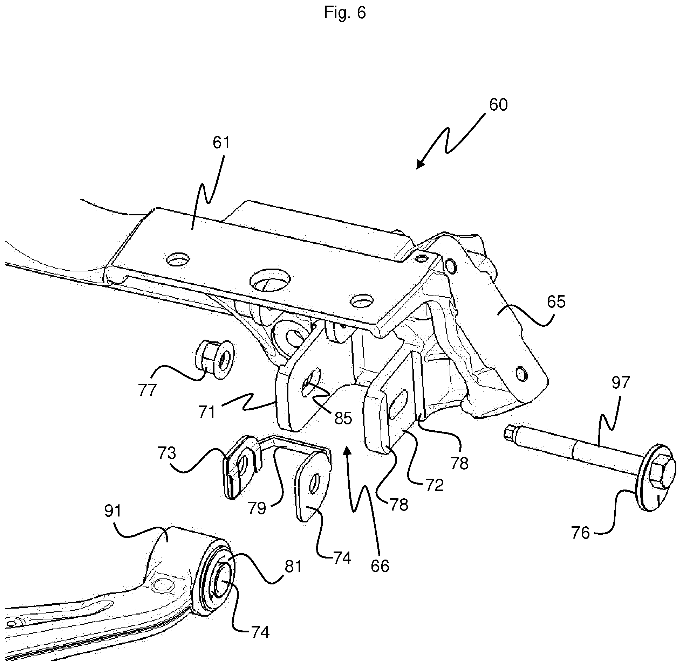

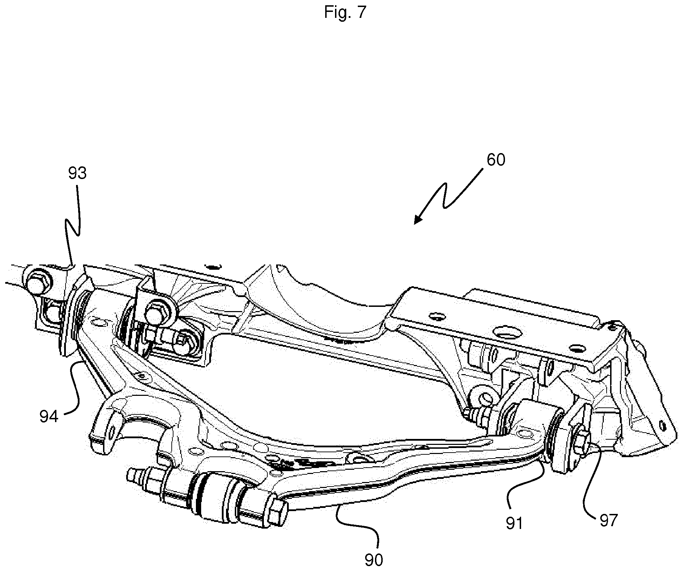

Les figures 6 et 7 montrent plus en détails comment fixer un bras de suspension sur la pièce 60 de fonderie en aluminium. Les explications qui vont suivre sont aisément transposables à la pièce 50 de fonderie en aluminium par symétrie par rapport à l'axe longitudinal du véhicule qui est aussi axe de symétrie du longeron 10 par rapport au longeron 20.

Il convient de préciser que le dispositif de l'invention appartient à une zone fortement sollicitée mécaniquement car directement reliée à la roue du véhicule.

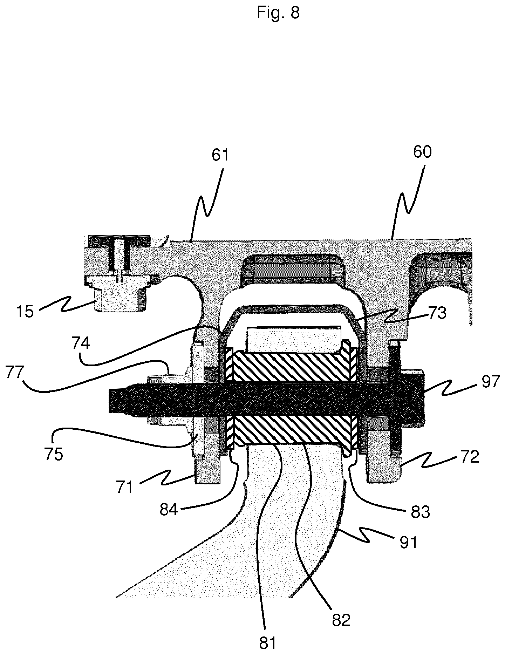

La figure 6, montre l'extrémité de bras 91 de suspension qui comporte une bague cylindrique 81 d'articulation (bushing en anglais). La bague cylindrique, parfois nommée aussi coussinet, réalise une liaison pivot entre l'extrémité de bras 91 de suspension et la pièce 60 de fonderie d'aluminium. Pour ce faire, l'extrémité de bras 91 de suspension comporte une terminaison cylindrique creuse pour y loger la bague cylindrique 81. Comme on peut le voir sur la figure 8, la bague cylindrique 81 comprend un cylindre élastomère 82 percé en son centre pour permettre le passage d'une vis 97. Les génératrices externes du cylindre élastomère 82 sont directement ou indirectement solidaires des génératrices internes de la terminaison cylindrique creuse. Chaque extrémité latérale de la bague cylindrique 81 est solidaire d'un disque 83, 84 en métal qui réalise l'interface avec les pièces environnantes. Chaque disque 83, 84, généralement en acier, est lui aussi percé en son centre pour permettre le passage de la vis 97.

Le principe d'assemblage est de loger puis de pincer la bague cylindrique 81 entre deux plans d'appuis. La liaison est consolidée à l'aide d'un élément axial type vis permettant alors de pincer la bague cylindrique 81 entre les deux appuis plans en permettant la rotation de la terminaison cylindrique creuse du bras de suspension autour de la vis par torsion du cylindre élastomère 82 qui amortit la transmission de vibrations entre les roues et la pièce 60 de fonderie d'aluminium, et par conséquent entre les roues et le longeron latéral 20 sous lequel est fixée la face supérieure 61 de la pièce 60.

La pièce de fonderie d'aluminium du dispositif de liaison entre le longeron latéral en aluminium de structure de caisse de véhicule et l'extrémité de bras de suspension comprend aussi une paroi latérale de laquelle émerge une interface de bras de suspension comprenant une paire d'ailettes distantes entre elles d'une valeur d'entrefer supérieure à la longueur de la bague cylindrique 81 de façon à enchâsser l'extrémité de bras de suspension. L'entrefer entre les deux ailettes destinées à accueillir la bague cylindrique 81 d'articulation, offre ainsi un jeu de montage qui, après serrage de la vis, est résorbé de façon à garantir le bon fonctionnement du dispositif en plaquant de manière parfaite les ailettes contre les surfaces latérales de la bague cylindrique 81 d'articulation.

Un mode de réalisation de l'interface de bras de suspension peut comprendre la chape en acier 93 qui comporte alors une paire d'ailettes 98, 99 en acier et qui est vissée sur la pièce 60 de fonderie d'aluminium comme c'est le cas pour la branche d'extrémité 94 du triangle de suspension 90 sur la figure 7, ou qui est vissée sur la pièce 50 de fonderie d'aluminium comme c'est le cas pour la branche d'extrémité 94 du triangle de suspension 90 sur la figure 4.

Un mode de réalisation particulièrement avantageux de l'interface de bras de suspension comprend une paire d'ailettes 56, 66 qui fait partie intégrante de la pièce 50, 60 de fonderie d'aluminium avec soumission à une opération d'usinage après sortie de fonderie. L'opération d'usinage a pour objectif notamment d'obtenir le jeu de montage le plus faible à rattraper tout en facilitant le montage de la bague 81 quelles que soient les dispersions d'usinage des ailettes de fonderie et de fabrication de la bague d'articulation (bushing en anglais). Ce deuxième mode de réalisation est celui appliqué au bras de suspension qui constitue la branche d'extrémité 91 du triangle de suspension 90 sur les figures 4 et 7.

Le deuxième mode de réalisation a pour avantage d'être moins encombrant et moins lourd que celui de la chape 93 en acier. La paire d'ailettes 56 sur la figure 4 et la paire d'ailettes 66 sur la figure 6, issues directement de la pièce de fonderie d'aluminium, ont pour faculté de libérer de la place au profit d'une interface de biellette de pince qui comporte la paire d'ailettes 57 pour enchâsser une extrémité de biellette de pince 92 et qui fait, elle aussi, partie intégrante de la pièce 50 ou 60 de fonderie d'aluminium avec soumission à une opération d'usinage après sortie de fonderie. On rappelle que, de manière connue en soi, la biellette de pince a pour rôle de jouer sur le parallélisme des roues d'un même essieu.

Cependant l'aluminium est un matériau tendre comparé à l'acier lorsque les disques 83, 84 sont constitués de ce métal. Pour éviter le matage des ailettes de fonderie par la bague cylindrique 81 d'articulation, le dispositif comprend au moins une cale 73 et si nécessaire une cale 74, insérées entre d'une part le disque 83 en extrémité de la bague cylindrique 81 et une face intérieure de l'ailette 72 de la paire d'ailettes 66 et/ou entre d'une part le disque 84 en extrémité de la bague cylindrique 81 et une face intérieure de l'ailette 71 de la paire d'ailettes 66 en figures 6 et 8, ou de de la paire d'ailettes 56 en figures 4.

Ainsi, les cales permettent d'augmenter la surface d'appuis de la bague cylindrique 81 sur les ailettes. L'effort est mieux réparti, le matage est limité. Mais ces cales ont également des dispersions de fabrication, ce qui ajoute un maillon supplémentaire dans la chaine de cotes d'assemblage. En d'autres termes, il faut agrandir l'entrefer nominal de manière à assurer un jeu de montage minimal en fonction des dispersions de fabrication des pièces, de façon à faciliter le montage.

Une commodité de montage est procurée par une barrette 79 qui relie deux cales 73, 74. De la sorte il est possible d'introduire simultanément des deux cales 73, 74 entre les deux ailettes 71, 72 en poussant simplement sur la barrette 79.

La paire d'ailettes 66, en aluminium, comprend une première ailette 72 à base massive pour maintenir rigidement sa position de façon à servir de référence géométrique à l'extrémité de bras 91 de suspension, et par conséquent au triangle lorsque le bras en est une branche. La paire d'ailettes 66 comprend aussi une deuxième ailette 71 à base amincie pour permettre à son extrémité opposée de s'orienter vers la première ailette 72 de manière à pincer la bague cylindrique 81 entre les deux ailettes. L'amincissement de l'ailette est de préférence réalisé par usinage de manière à rendre l'ailette suffisamment souple pour s'approcher de la bague cylindrique 81, sans la rendre trop souple pour qu'elle tienne aux efforts mécaniques auxquels elle est soumise. Le compromis entre la souplesse et la tenue aux sollicitations mécaniques, dépend de nombreux facteurs comprenant les caractéristiques techniques du véhicule et de l'alliage de fonderie utilisé. Pour chaque type de véhicule, le bon compromis est trouvé par itérations de calcul, de manière connue en soi par l'homme du métier. Ainsi par exemple, dans un processus de fabrication de la pièce de fonderie d'aluminium en coulée par gravité dans un moule en coquille avec une nuance d'aluminium nommée AlSi7Mg0.3KT6, on obtient aisément une bonne rigidité de l'ailette 72. On peut obtenir un bon compromis entre souplesse et tenue mécanique de l'ailette 71 en réduisant l'épaisseur de la base de l'ailette 71 dans une plage variant du tiers à la moitié de l'épaisseur de la base de l'ailette 72, de préférence en donnant une forme cylindrique concave à la face extérieure de la base de l'ailette 71.

Le dispositif comprend une vis 97 traversant les ailettes 71, 72, la bague cylindrique 81 d'articulation, et lorsqu'elles existent les cales 73, 74, pour réduire par serrage la valeur d'entrefer de la paire d'ailettes 66 de l'interface de bras de suspension. Il en est de même de la paire d'ailettes 56 et de manière comparable des ailettes 98, 99 de la chape 93.

Chaque ailette 71, 72 comporte une fenêtre oblongue 85 de longueur sensiblement parallèle à la face supérieure 61 de la pièce de fonderie d'aluminium. Cette forme permet, en phase de montage et/ou de mise au point de l'extrémité de bras de suspension, d'approcher et d'éloigner la bague cylindrique 81 d'articulation et par conséquent l'extrémité de bras de suspension de la pièce de fonderie d'aluminium en faisant glisser le corps de la vis 97 dans la fenêtre oblongue 85 dont la largeur est très légèrement supérieure au diamètre du corps de la vis 97.

Un disque excentrique 76 est fixé sur le corps de vis contre la tête de la vis 97. En d'autres termes le centre du disque excentrique 76 est désaxé par rapport à l'axe de la vis 97. La vis 97 pénètre dans la fenêtre oblongue de l'ailette 72 jusqu'à plaquer le disque excentrique 76 contre la face extérieure de l'ailette 72.

La face extérieure de l'ailette 72 comprend un canal entre deux épaulements formant chacun une glissière 78 contre laquelle vient s'appliquer la tranche du disque excentrique 76. Les épaulements sont espacés l'un de l'autre d'une distance à peine supérieure au diamètre du disque excentrique 76 de sorte qu'il est possible de faire glisser le corps de la vis 97 dans la fenêtre oblongue 85 en tournant la vis 97. On peut prévoir aussi une rondelle excentrique 75 semblable au disque excentrique 76 pour venir s'appliquer contre la face externe de l'ailette 71. La rondelle excentrique 75 comporte un alésage au diamètre de la vis 97 à l'intérieur duquel une nervure ou clavette pénètre dans une rainure pratiquée le long du corps de la vis 97 de sorte que la rondelle 75 tourne avec la vis de manière identique au disque excentrique 76. Ainsi le réglage obtenu par la position angulaire du disque excentrique 76 est reporté sur l'ailette 71 par la rondelle 75. Lorsque la position voulue du corps de la vis 97, et par conséquent de l'extrémité du bras de suspension, est atteinte, on empêche la vis 97 de tourner et on vient fixer un écrou 77 sur l'extrémité de la vis opposée à la tête, pour bloquer la vis en rotation et obtenir le serrage voulu. Cette particularité du dispositif est utile lorsque le bras de suspension constitue une branche de triangle inférieur de suspension. Un mécanisme d'excentrique similaire est mis en oeuvre sur les ailettes 98, 99 de la chape 93 pour l'autre branche du triangle inférieur.

Ainsi, en éloignant au moyen du disque excentrique de manière identique les extrémités de bras de suspension 91 et 94 par rapport à la pièce de fonderie d'aluminium, on rapproche le sommet de la roue du centre du véhicule. Réciproquement, en rapprochant au moyen du disque excentrique de manière identique les extrémités de bras de suspension 91 et 94 par rapport à la pièce de fonderie d'aluminium, on éloigne le sommet de la roue du centre du véhicule. Le dispositif permet ainsi de régler le carrossage du véhicule.

## Revendications

1. Dispositif de liaison entre un longeron latéral (10, 20) en aluminium de structure de caisse de véhicule, un assemblage de berceau (30) et une extrémité de bras (91, 94) de suspension qui comporte une bague cylindrique (81) d'articulation, **caractérisé en ce qu'**il comporte une pièce (50, 60) de fonderie d'aluminium comprenant une face supérieure (51, 61) apte à être fixée sous ledit longeron (10, 20), une face inférieure apte à être fixée sur ledit berceau (30) et une paroi latérale de laquelle émerge perpendiculairement à une face latérale externe au moins une première interface de bras de suspension comprenant une paire d'ailettes (56, 66, 98, 99) distantes entre elles d'une valeur d'entrefer supérieure à la longueur de ladite bague cylindrique (81) de façon à enchâsser ladite extrémité de bras (91, 94) de suspension.

2. Dispositif selon la revendication 1, **caractérisé en ce que** la première interface de bras de suspension comprend une paire d'ailettes (56, 66) qui fait partie intégrante de la pièce (50, 60) de fonderie d'aluminium avec soumission à une opération d'usinage après sortie de fonderie.

3. Dispositif selon la revendication 2, **caractérisé en ce que** ladite paire d'ailettes (56, 66) comprend une première ailette (72) à base massive pour maintenir rigidement sa position et une deuxième ailette (71) à base amincie pour permettre à son extrémité opposée de s'orienter vers ladite première ailette (72) de manière à pincer ladite bague cylindrique (81) entre les deux ailettes.

4. Dispositif selon l'une des revendications 2 ou 3, **caractérisé en ce qu'**il comprend au moins une cale (73, 74) insérée entre une extrémité (83, 84) de ladite bague cylindrique (81) et une face intérieure de la paire d'ailettes.

5. Dispositif selon la revendication 4, **caractérisé en ce que** deux cales (73, 74) sont reliées par une barrette (79).

6. Dispositif selon l'une quelconque des revendications précédentes, **caractérisé en ce que** la pièce (50, 60) de fonderie d'aluminium comprend une interface de biellette de pince qui comporte une paire d'ailettes (57) pour enchâsser une extrémité de biellette de pince (92) et qui fait partie intégrante de la pièce (50, 60) de fonderie d'aluminium avec soumission à une opération d'usinage après sortie de fonderie.

7. Dispositif selon l'une quelconque des revendications précédentes, **caractérisé en ce que** la première ou une deuxième interface de bras de suspension comprend une chape en acier (93) qui comporte une paire d'ailettes (98, 99) et qui est vissée sur la pièce (50, 60) de fonderie d'aluminium.

8. Dispositif selon l'une quelconque des revendications précédentes, **caractérisé en ce qu'**il comprend une vis (97) traversant les ailettes et la bague cylindrique (81) d'articulation pour réduire par serrage la valeur d'entrefer de la paire d'ailettes (56, 66, 98, 99) d'une même interface de bras de suspension.

9. Dispositif selon la revendication 8, **caractérisé en ce que** chaque ailette (71, 72) comporte une fenêtre oblongue (85) de longueur sensiblement parallèle à ladite face supérieure (61) de la pièce de fonderie d'aluminium de sorte qu'il est possible d'approcher et d'éloigner la bague cylindrique (81) d'articulation et par conséquent l'extrémité de bras de suspension de la pièce de fonderie d'aluminium en faisant glisser le corps de ladite vis (97) dans la fenêtre oblongue (85).

10. Dispositif selon la revendication précédente, **caractérisé en ce que** ladite vis (97) comporte un disque excentrique (76) pour se plaquer contre une face d'ailette qui comprend au moins une glissière (78) contre laquelle vient s'appliquer la tranche du disque excentrique (76) de sorte qu'il est possible de faire glisser le corps de ladite vis (97) dans la fenêtre oblongue (85) en tournant ladite vis (97).

## Patentansprüche

1. Verbindungsvorrichtung zwischen einem seitlichen Fahrzeugaufbaulängsträger (10, 20) aus Aluminium, einer Schleifenanordnung (30) und einem Aufhängungslenkerende (91, 94), das einen zylindrischen Gelenkring (81) aufweist, **dadurch gekennzeichnet, dass** sie ein Aluminiumgussteil (81) (50, 60) aufweist, das eine obere Fläche (51, 61), die unter dem Längsträger (10, 20) befestigt werden kann, eine untere Fläche, die an der Schleife (30) befestigt werden kann, und eine Seitenwand umfasst, aus der senkrecht zu einer äußeren Seitenfläche mindestens eine erste Aufhängungslenkerschnittstelle hervortritt, die ein Paar voneinander beabstandeter Rippen (56, 66, 98, 99) mit einem Spaltwert umfasst, der größer als die Länge des zylindrischen Rings (81) ist, um das Aufhängungslenkerende (91, 94) einzupassen.

2. Vorrichtung nach Anspruch 1, **dadurch gekennzeichnet, dass** die erste Aufhängungslenkerschnittstelle ein Paar Rippen (56, 66) umfasst, die einen integralen Teil des Aluminiumgussteils (50, 60) darstellen, nachdem es einem Bearbeitungsvorgang nach dem Gießen unterzogen worden ist.

3. Vorrichtung nach Anspruch 2, **dadurch gekennzeichnet, dass** das Paar Rippen (56, 66) eine erste Rippe (72) mit massiver Basis zur starren Aufrechterhaltung ihrer Position und eine zweite Rippe (71) mit dünner Basis umfasst, damit ihr gegenüberliegendes Ende so auf die erste Rippe (72) ausrichten kann, dass der zylindrische Ring (81) zwischen den beiden Rippen geklemmt wird.

4. Vorrichtung nach einem der Ansprüche 2 oder 3, **dadurch gekennzeichnet, dass** sie mindestens eine Beilage (73, 74) umfasst, die zwischen einem Ende (83, 84) des zylindrischen Rings (81) und einer Innenfläche des Rippenpaars eingeführt ist.

5. Vorrichtung nach Anspruch 4, **dadurch gekennzeichnet, dass** zwei Beilagen (73, 74) über einen Steg (79) verbunden sind.

6. Vorrichtung nach einem der vorhergehenden Ansprüche, **dadurch gekennzeichnet, dass** das Aluminiumgussteil (50, 60) eine Klemmhebelschnittstelle umfasst, die ein Paar Rippen (57) aufweist, um ein Klemmhebelende (92) einzupassen, und die einen integralen Teil des Aluminiumgussteils (50, 60) darstellt, nachdem es einem Bearbeitungsvorgang nach dem Gießen unterzogen worden ist.

7. Vorrichtung nach einem der vorhergehenden Ansprüche, **dadurch gekennzeichnet, dass** die erste oder eine zweite Aufhängungslenkerschnittstelle einen Gabelbügel (93) aus Stahl umfasst, der ein Paar Rippen (98, 99) aufweist und der an das Aluminiumgussteil (50, 60) geschraubt ist.

8. Vorrichtung nach einem der vorhergehenden Ansprüche, **dadurch gekennzeichnet, dass** sie eine durch die Rippen und den zylindrischen Gelenkring (81) gehende Schraube (97) umfasst, um den Spaltwert des Paars Rippen (56, 66, 98, 99) derselben Aufhängungslenkerschnittstelle durch Festziehen zu reduzieren.

9. Vorrichtung nach Anspruch 8, **dadurch gekennzeichnet, dass** jede Rippe (71, 72) ein längliches Fenster (85) aufweist, dessen Länge im Wesentlichen parallel zu der oberen Fläche (61) des Aluminiumgussteils verläuft, so dass der zylindrische Gelenkring (81) und folglich das Aufhängungslenkerende des Aluminiumgussteils angenähert und wegbewegt werden können, indem der Körper der Schraube (97) in dem länglichen Fenster (85) verschoben wird.

10. Vorrichtung nach dem vorhergehenden Anspruch, **dadurch gekennzeichnet, dass** die Schraube (97) eine exzentrische Scheibe (76) aufweist, um sich gegen eine Rippenfläche zu pressen, die mindestens eine Gleitschiene (78) umfasst, an der sich der Rand der exzentrischen Scheibe (76) anlegt, so dass der Körper der Schraube (97) in dem länglichen Fenster (85) verschoben werden kann, indem die Schraube (97) gedreht wird.

## Claims

1. Device for connection between an aluminium lateral side member (10, 20) of a vehicle body structure, a cradle assembly (30) and an end of suspension arm (91, 94) that has a cylindrical articulation ring (81), **characterized in that** it has an aluminium casting (50, 60) comprising an upper face (51, 61) able to be fastened beneath said side member (10, 20), a lower face able to be fastened on said cradle (30) and a lateral wall from which there emerges, perpendicular to an external lateral face, at least a first suspension arm interface having a pair of fins (56, 66, 98, 99) that are spaced apart from each other by an air gap value greater than the length of said cylindrical ring (81), so as to encase said end of suspension arm (91, 94).

2. Device according to Claim 1, **characterized in that** the first suspension arm interface comprises a pair of fins (56, 66) that form an integral part of the aluminium casting (50, 60), with subjection to a machining operation after leaving the foundry.

3. Device according to Claim 2, **characterized in that** said pair of fins (56, 66) comprises a first fin (72) having a bulky base in order to rigidly maintain its position, and a second fin (71) having a thinned base in order to allow its opposite end to be oriented towards said first fin (72) so as to clamp said cylindrical ring (81) between the two fins.

4. Device according to either of Claims 2 and 3, **characterized in that** it comprises at least one spacer (73, 74) inserted between an end (83, 84) of said cylindrical ring (81) and an inner face of the pair of fins.

5. Device according to Claim 4, **characterized in that** two spacers (73, 74) are connected by a small bar (79).

6. Device according to any one of the preceding claims, **characterized in that** the aluminium casting (50, 60) comprises a track rod interface that has a pair of fins (57) in order to encase an end of track rod (92) and forms an integral part of the aluminium casting (50, 60), with subjection to a machining operation after leaving the foundry.

7. Device according to any one of the preceding claims, **characterized in that** the first or a second suspension arm interface comprises a steel clevis (93) that has a pair of fins (98, 99) and is screwed onto the aluminium casting (50, 60).

8. Device according to any one of the preceding claims, **characterized in that** it comprises a screw (97) passing through the fins and the cylindrical articulation ring (81) in order to reduce, by tightening, the air gap value of the pair of fins (56, 66, 98, 99) of a single suspension arm interface.

9. Device according to Claim 8, **characterized in that** each fin (71, 72) has an oblong window (85) with a length substantially parallel to said upper face (61) of the aluminium casting such that it is possible to move the cylindrical articulation ring (81), and consequently the end of suspension arm, closer to and further away from the aluminium casting by sliding the body of said screw (97) in the oblong window (85).

10. Device according to the preceding claim, **characterized in that** said screw (97) has an eccentric disc (76) in order to press against a fin face that has at least one slideway (78) against which the edge face of the eccentric disc (76) is applied, such that it is possible to slide the body of said screw (97) in the oblong window (85) by turning said screw (97).
